# EUROPÄISCHE PATENTANMELDUNG

(11) **EP 3 249 374 A1**
(43) Veröffentlichungstag der Anmeldung: **29.11.2017**
(21) Anmeldenummer: 17171094.0
(22) Anmeldetag: 15.05.2017
(51) Int. Cl.: G01M 3/02, F16L 41/00, F16L 55/115, F16L 55/07

(54) **DRUCKPRÜFVORRICHTUNG**

(30) Priorität: 28.05.2016 DE 202016003401 U
(71) Anmelder: Veltec GmbH, 63843 Niedernberg (DE)
(72) Erfinder: Knoll, Karl-Heinz, 63546 Hammersbach (DE)
(74) Vertreter: Wächter, Jochen

(57) **Zusammenfassung**

Die Vorrichtung zum Verschließen eines offenen, zylindrischen Rohrendes (7) und zur hydrostatischen Druckprüfung eines daran anschließenden Rohrsystems umfasst einen Boden (1), ein ringförmiges Gehäuse (2) mit einer konischen Spannfläche (9a) auf der Innenseite und mehrere Spannbacken (3), die als Ringsegmente mit im Wesentlichen konischer Außenfläche (9b) ausgebildet sind. Der Boden (1) und das Gehäuse (2) sind über eine zylindrische Verschraubung (11) miteinander verschraubbar, um zusammen eine Art Kappe zur Aufnahme des Rohrendes (7) zu bilden. Die Spannbacken (3) können über die Spannfläche (9a) des Gehäuses in Zusammenwirken mit dem Boden (1) auf die Außenfläche des Rohrendes (7) gepresst werden, so dass die Vorrichtung auf dem Rohrende (7) festgeklemmt werden kann. Die Vorrichtung weist auch eine Dichtung (4) zur Abdichtung gegen die Außenfläche des Rohrendes (7) sowie einen Druckanschluss (12) zur Zuführung von Druckfluid auf.

## Beschreibung

Die Erfindung betrifft eine Vorrichtung zum Verschließen eines zylindrischen Rohrendes und zur hydrostatischen Druckprüfung von Rohrabschnitten oder Rohrsystemen, die sich daran anschließen.

Bekannt sind Vorrichtungen zur Druckprüfung von Rohrabschnitten oder Rohrsystemen, die als eine Art Stopfen ausgebildet sind. Diese Vorrichtung wird in den Rohrabschnitt eingeführt und über eine mechanische Verspannung in axialer Richtung werden flexible Dichtringe radial nach außen an die Innenwand des Rohres gedrückt. So wird der Stopfen im Rohrinneren verklemmt und dichtet ab. Über Anschlüsse im Stopfen kann Druckfluid dem Rohrsystem zugeführt werden und so die Druckprüfung vorgenommen werden.

In der Druckschrift EP 1 123 494 B ist beispielsweise eine solche Vorrichtung zum Verschließen und Prüfen von Rohrabschnitten beschrieben. Sie wird über eine Mutter auf einer Schaftstange mit Gewinde verspannt. Die Verklemmung im Rohr und die Abdichtung erfolgen über die gleichen Elemente. Die Vorrichtung ist besonders dafür optimiert, einzelne Schweißnähte zu prüfen, ohne das ganze Rohrsystem unter Druck setzen zu müssen. Die Vorrichtung ist relativ komplex und nicht so einfach für große Durchmesser oder hohe Drücke einsetzbar.

Weiterhin ist bekannt, Rohrenden mit angeschweißten Flanschen und Blinddeckeln oder angeschweißten Rohrkappen zu verschließen. Oder es werden Zuganker oder andere Stützkonstruktionen am Rohrende angeschweißt oder befestigt, um die Rohrkappen zu halten. Über Zuführöffnungen kann dann das Druckfluid für die Druckprüfung zugeführt werden. Bei ausreichend starker Dimensionierung sind auch höhere Prüfdrücke möglich. Allerdings ist in jedem Fall hoher mechanischer Vorbereitungsaufwand erforderlich.

Die Aufgabe der Erfindung ist es, eine Vorrichtung zum Verschließen eines zylindrischen Rohrendes und zur hydrostatischen Druckprüfung von Rohrabschnitten oder Rohrsystemen zu entwickeln, die einfacher zu handhaben und zuverlässig auch bei hohen Prüfdrücken verwendet werden kann, ohne dass aufwändige Vorbereitungsarbeiten am Rohrsystem notwendig sind.

Die Aufgabe wird erfindungsgemäß durch eine Vorrichtung gemäß Anspruch 1 gelöst.

Weitere vorteilhafte Merkmale der erfindungsgemäßen Ausführung, die die Vorrichtung weiter verbessern, finden sich in den Unteransprüchen.

Die erfindungsgemäße Vorrichtung weist einen Boden, ein ringförmiges Gehäuse mit einer konischen Spannfläche auf der Innenseite und mehrere Spannbacken, die als Ringsegmente mit im Wesentlichen konischer Außenfläche ausgebildet sind, auf. Der Boden und das Gehäuse können über eine zylindrische Verschraubung miteinander verschraubt werden, so dass sie zusammen eine Art Kappe bilden, die ein offenes, zylindrisches Rohrende umfassen kann, wobei die Spannbacken über die Spannfläche des Gehäuses in Zusammenwirken mit dem Boden auf die Außenfläche des Rohrendes gepresst werden können, so dass die Vorrichtung dadurch auf dem Rohrende festgeklemmt wird. Zusätzlich ist eine Dichtung zur Abdichtung zwischen der Vorrichtung und der Außenfläche des Rohrendes vorgesehen, sowie ein Druckanschluss zur Zuführung von Druckfluid. Als Druckfluid kommt insbesondere Wasser oder eine Wasseremulsion in Frage.

Der Vorteil der Vorrichtung besteht darin, dass sie ohne zusätzliche mechanische Vorbereitung am Rohrende und ohne sonstige Halterungen auf dem Rohrende befestigt werden kann. Es ist lediglich eine Druckversorgung zum Beispiel über eine Pumpe, einen Druckspeicher oder ein Drucknetz notwendig. Die Haltekraft beziehungsweise die Vorspannkraft wird durch die Verschraubung von Boden und Gehäuse aufgebracht. Dadurch steht eine einfache, zuverlässige und besonders wirtschaftliche Lösung zur Verfügung. Bei mehreren offenen Rohrenden im Rohrsystem eignet sich die Vorrichtung auch einfach zum Verschließen der weiteren Rohrenden. Der Innendurchmesser der Vorrichtung muss zum Außendurchmesser des Rohrendes passen. Für verschiedene Durchmesser müssen unterschiedliche, jeweils passende Vorrichtungen beziehungsweise Innenteile verwendet werden. Dadurch, dass mehrere Spannbacken als Ringsegmente verwendet werden, ist allerdings ein gewisser Toleranzbereich ausgleichbar.

Unter ringförmigem Gehäuse wird verstanden, dass es geeignet ist, ein zylindrisches Rohrende zu umschließen. Das heißt nicht unbedingt, dass es vollkommen kreisförmig sein muss. Insbesondere die Außenkontur kann auch mehreckig oder mit geeigneten Angriffspunkten oder Hebeln zum Verschrauben gestaltet sein.

Bevorzugt wird die Vorrichtung überwiegend aus Stahl oder Edelstahl gefertigt. Dadurch ist eine ausreichende Festigkeit auch für höhere Prüfdrücke, insbesondere bis zu 500 bar oder mehr, möglich. Je nach Anwendung sind aber auch andere Materialien verwendbar. Für die Spannbacken und die Dichtung wird bevorzugt Kunststoff, verstärkter Kunststoff oder ein anderes geeignetes Material verwendet.

Besonders vorteilhaft ist es, wenn die Vorrichtung derart gestaltet ist, dass eine Erhöhung des Innendruckes in dem Rohrende dazu führt, dass die Anpresskraft der Spannbacken auf die Außenfläche des Rohrendes erhöht wird. Somit wird die Vorrichtung selbsthaltend. Die Verschraubung stellt einen anfänglichen Anpressdruck her und die Erhöhung des Innendruckes beim Prüfen erhöht diesen dann entsprechend, beispielsweise dadurch, dass der Innendruck auf den Boden wirkt und diesen vom Rohrende weg nach außen drückt, wodurch über die Verschraubung und die Spannfläche am Gehäuse eine erhöhte Anpresskraft auf die Spannbacken ausgeübt wird. Durch die geeignete Wahl der Konusfläche an den Spannbacken und der Spannfläche des Gehäuses, vor allem bezüglich Neigung und Beschaffenheit, kann die Anpresskraft in Abhängigkeit von Verschraubung und Innendruck ausgelegt werden. Zusätzlich kann eine Schmierung zwischen Spannfläche und Spannbacken vorgesehen sein, damit die Reibungsverluste und damit eine Reduktion der Anpresskraft gering bleiben.

Zusätzlich kann ein Druckring derart vorgesehen sein, dass dieser bei Anliegen eines Innendruckes im Rohrende direkt oder zumindest mittelbar durch den Innendruck so auf die Spannbacken gedrückt wird, dass die Anpresskraft der Spannbacken auf die Außenfläche des Rohrendes erhöht wird. Das kann beispielsweise dadurch erfolgen, dass der Druckring über die Dichtung, die bevorzugt als Dichtring ausgeführt ist, vom Innendruck in axialer Richtung an die Seitenfläche der Spannbacken gedrückt wird. Der seitliche Druck erhöht die Anpresskraft an der konischen Außenfläche der Spannbacken und wird dort über die Spannfläche des Gehäuses umgelenkt in radialer Richtung, wodurch die Anpresskraft der Spannbacken auf der Außenfläche des Rohrendes erhöht wird.

Besonders geeignet sind Vorrichtungen, die eine Länge in Rohrachsenrichtung zwischen 50 und 600 mm aufweisen. Dadurch ist zum einen genug Platz, um ausreichend breite Spannbacken und eine tragfähige zylindrische Verschraubung unterzubringen, und zum anderen ist die Vorrichtung kurz genug, dass sie nicht zu viel Platzbedarf auf dem Rohrende benötigt. So lässt sie sich zuverlässig und flexibel bei unterschiedlichen Rohrsystemen einsetzen.

Weiterhin ist es vorteilhaft, wenn die Vorrichtung so ausgeführt ist, dass sie für einen Außendurchmesser des Rohrendes zwischen 50 und 600 mm geeignet ist. Bei kleineren Durchmessern ist es schwierig, die Spannbacken unterzubekommen und für eine ausreichende Haltekraft zu sorgen. Ebenso ist es bei zu großen Durchmessern schwierig, die hohen Kräfte, die sich aus der großen Querschnittsfläche ergeben, ausreichend alleine über die Außenfläche aufzunehmen.

In einer bevorzugten Ausführungsform sind mindestens drei, und besonders bevorzugt mindestens fünf Spannbacken vorhanden. Dadurch lässt sich ein gutes Anpressen der Spannbacken an die Außenfläche des Rohrendes realisieren, da eine einzelne Spannbacke keinen zu großen Kreisanteil überdecken muss. Je größer der Durchmesser, umso mehr Spannbacken sollten vorhanden sein. Die einzelnen Spannbacken haben aber dennoch eine ausreichend große Anpressfläche, um eine sichere Klemmung zu erzielen.

Um die Reibung an der Außenfläche des Rohrendes zu erhöhen und somit die Klemmung zu verbessern, können die Spannbacken auf ihrer Innenfläche zahlreiche radiale oder eine oder mehrere spiralförmig angeordnete Rillen aufweisen. Durch diese Rillung, die auch als Riffelung oder in unterbrochener Weise ausgebildet sein kann, wird die Reibung besonders gut erhöht.

Vorteilhaft ist es, wenn die Spannbacken auf ihrer Innenfläche eine oder mehrere Nuten mit darin befindlichen Federringen aufweisen. So werden die Spannbacken bei Druckentlastung durch die Federringe von der Außenfläche des Rohrendes weggedrückt. Dadurch lässt sich die Vorrichtung nach Beendigung der Prüfung leichter aufschrauben und abziehen.

Zusätzlich ist es von Vorteil, wenn der Boden mindestens eine verschließbare Öffnung zur Entlüftung aufweist. Dadurch kann eine gute Entlüftung und ein hoher Füllungsgrad mit Druckfluid bei der Prüfung erreicht werden. Beim Zuführen des Druckfluids ist zunächst zumindest eine Entlüftungsöffnung offen, um ein Abströmen der im Rohrsystem befindlichen Luft zu ermöglichen. Ist das Rohrsystem vollständig mit Druckfluid gefüllt, wird die Entlüftungsöffnung verschlossen und der Druck für die Prüfung weiter erhöht.

Anhand eines Ausführungsbeispiels werden weitere vorteilhafte Ausprägungen der Erfindung unter Bezugnahme auf die Zeichnungen erläutert. Die genannten Merkmale können nicht nur in der dargestellten Kombination vorteilhaft umgesetzt werden, sondern auch einzeln untereinander kombiniert werden. Im Einzelnen zeigen:
- Fig. 1a: eine Schnittansicht einer erfindungsgemäßen Vorrichtung mit geklemmtem Rohrabschnitt;
- Fig. 1b: eine Schnittansicht einer erfindungsgemäßen Vorrichtung; und
- Fig. 2: eine Frontansicht einer erfindungsgemäßen Vorrichtung.

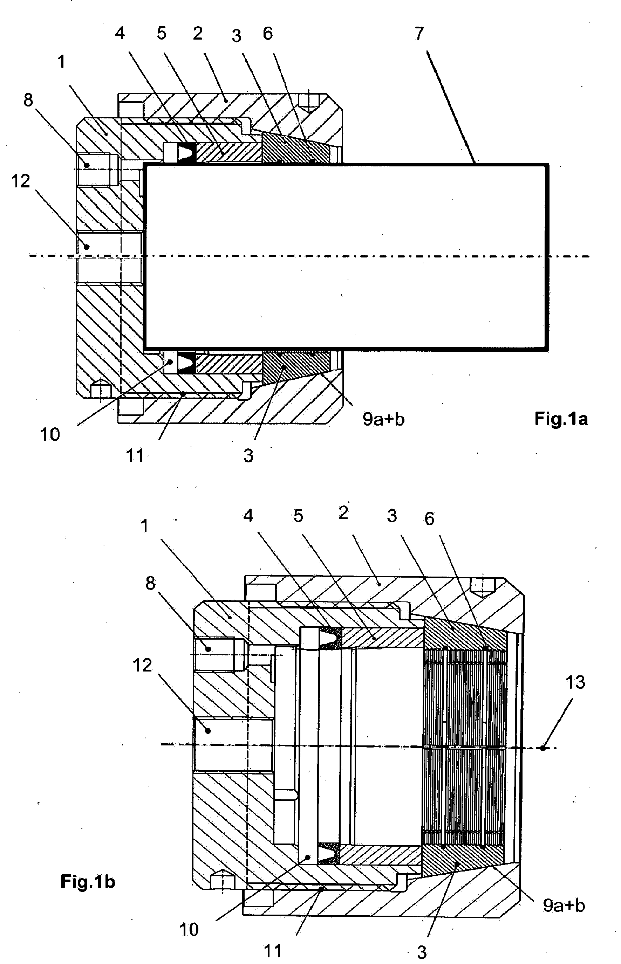

In Fig. 1a und Fig. 1b ist eine Seitenansicht einer erfindungsgemäßen Ausführung in Schnittdarstellung zu sehen - einmal mit geklemmtem Rohrende 7 und einmal ohne. Das Rohrende gehört nicht zur Vorrichtung. Die Rohrachse ist mit 13 bezeichnet. Beide Darstellungen zeigen die Vorrichtung im zusammengeschraubten Zustand. Die Vorrichtung weist einen Boden 1 und ein ringförmiges Gehäuse 2 auf, die über die zylindrische Verschraubung 11 verbunden sind. Zusammen bilden sie eine Art Kappe, die das Rohrende 7 umfassen und verschließen kann. Zwischen Boden 1 und Gehäuse sind die Spannbacken 3 derart eingeklemmt, dass sie über die konischen Flächen 9a und 9b auf die Außenfläche des Rohrendes 7 gepresst werden. Über die Dichtung 4, die hier als Dichtring in Form eines Nutrings ausgeführt ist, wird der Innenraum des Rohrsystems gegen die Vorrichtung abgedichtet. Zusätzlich ist noch ein Druckring 5 vorhanden, der durch den Innendruck im Rohrende, welcher über den Druckraum 10 und die Dichtung 4 auf ihn wirkt, auf die Seitenfläche der Spannbacken 3 drückt und somit den Anpressdruck der Spannbacken 3 mit steigendem Innendruck weiter erhöht. Um eine möglichst verlustfreie Übertragung der Anpresskraft zwischen Gehäuse 2 beziehungsweise Druckring 5 und Spannbacken 3 auf die Außenfläche des Rohrendes 7 zu erzielen, ist es vorteilhaft die Spannfläche 9a zu schmieren. Für eine verbesserte Klemmung weisen die Spannbacken 3 auf der Innenfläche eine Vielzahl von Rillen auf. Des Weiteren sind zwei Nuten auf der Innenfläche vorgesehen, in denen Federringe 6 angeordnet sind. Die Federringe 6 drücken die Spannbacken 3 von der Rohraußenfläche weg, sobald der Druck entlastet wird. So lässt sich nach Beendigung der Druckprüfung die Verschraubung leichter lösen und die Vorrichtung leichter vom Rohrende abziehen. Im Boden sind der Druckanschluss 12 sowie die Entlüftungsöffnung 8 vorhanden. Beide sind mit einem Gewinde ausgeführt, so dass entsprechende Anschlussleitungen bzw. Stopfen oder Ventile aufgeschraubt werden können.

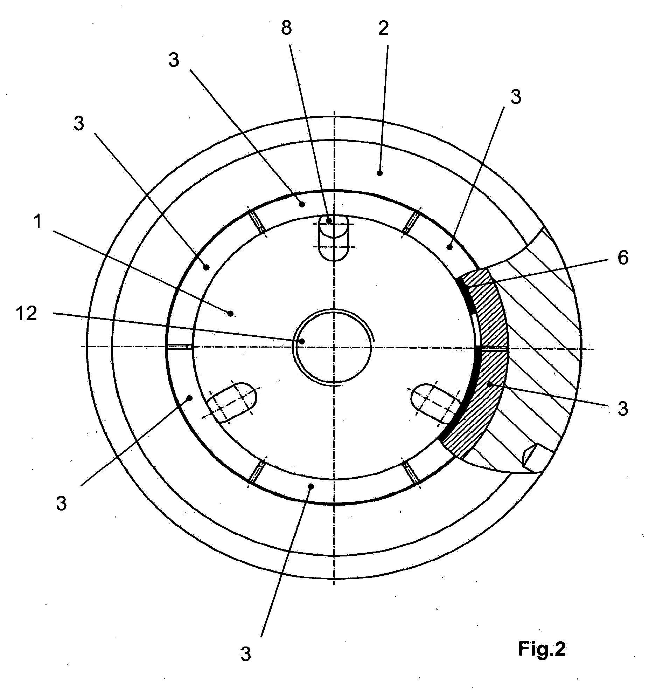

Fig. 2 zeigt die erfindungsgemäße Ausführung in angeschnittener Frontansicht mit Blick vom Rand des Gehäuses 2 ins Innere bis zum Boden 1. Gleiche Bauteile sind mit gleichen Bezugsziffern bezeichnet. Es ist zu erkennen, dass die dargestellte Ausführung sechs Spannbacken 3 aufweist, die kreissegmentartig ausgebildet sind. Am Unterschied zwischen der angeschnittenen Stelle und der nicht angeschnittenen Stelle ist die konische Ausführung der Spannbacken 3 und der Spannfläche zu erkennen.

### Bezugszeichenliste

- 1: Boden
- 2: Gehäuse
- 3: Spannbacken
- 4: Dichtung
- 5: Druckring
- 6: Federring
- 7: Rohrende
- 8: Entlüftungsanschluss
- 9a: konische Spannfläche des Gehäuses
- 9b: konische Außenfläche der Spannbacken
- 10: Druckraum
- 11: Gewinde
- 12: Druckanschluss
- 13: Rohrachse

## Patentansprüche

1. Vorrichtung zum Verschließen eines offenen, zylindrischen Rohrendes (7) und zur hydrostatischen Druckprüfung eines daran anschließenden Rohrsystems, aufweisend einen Boden (1), ein ringförmiges Gehäuse (2) mit einer konischen Spannfläche (9a) auf der Innenseite und mehrere Spannbacken (3), die als Ringsegmente mit im Wesentlichen konischer Außenfläche (9b) ausgebildet sind,
wobei der Boden (1) und das Gehäuse (2) über eine zylindrische Verschraubung (11) miteinander verschraubbar sind, um zusammen eine Art Kappe zur Aufnahme des Rohrendes (7) zu bilden,
wobei die Spannbacken (3) über die Spannfläche (9a) des Gehäuses in Zusammenwirken mit dem Boden (1) auf die Außenfläche des Rohrendes (7) gepresst werden können, so dass die Vorrichtung auf dem Rohrende (7) festgeklemmt werden kann, und
wobei die Vorrichtung eine Dichtung (4) zur Abdichtung gegen die Außenfläche des Rohrendes (7) sowie einen Druckanschluss (12) zur Zuführung von Druckfluid aufweist.

2. Vorrichtung nach Anspruch 1, **dadurch gekennzeichnet, dass** die Vorrichtung derart gestaltet ist, dass eine Erhöhung des Innendruckes in dem Rohrende (7) dazu führt, dass die Anpresskraft der Spannbacken (3) auf die Außenfläche des Rohrendes (7) erhöht wird.

3. Vorrichtung nach Anspruch 1 oder 2, **dadurch gekennzeichnet, dass** ein Druckring (5) derart vorgesehen ist, dass dieser bei Anliegen eines Innendruckes im Rohrende (7) zumindest mittelbar durch den Innendruck so auf die Spannbacken (3) gedrückt wird, dass die Anpresskraft der Spannbacken (3) auf die Außenfläche des Rohrendes (7) erhöht wird.

4. Vorrichtung nach einem der vorherigen Ansprüche, **dadurch gekennzeichnet, dass** die Länge der Vorrichtung in Rohrachsenrichtung (13) zwischen 50 und 600 mm beträgt.

5. Vorrichtung nach einem der vorherigen Ansprüche, **dadurch gekennzeichnet, dass** die Vorrichtung für einen Außendurchmesser des Rohrendes (7) zwischen 50 und 600 mm geeignet ist.

6. Vorrichtung nach einem der vorherigen Ansprüche, **dadurch gekennzeichnet, dass** mindestens drei, bevorzugt mindestens fünf Spannbacken (3) vorhanden sind.

7. Vorrichtung nach einem der vorherigen Ansprüche, **dadurch gekennzeichnet, dass** die Spannbacken (3) auf ihrer Innenfläche zahlreiche radiale oder eine oder mehrere spiralförmig angeordnete Rillen aufweisen.

8. Vorrichtung nach einem der vorherigen Ansprüche, **dadurch gekennzeichnet, dass** die Spannbacken (3) auf ihrer Innenfläche eine oder mehrere Nuten mit darin befindlichen Federringen (6) aufweisen.

9. Vorrichtung nach einem der vorherigen Ansprüche **dadurch gekennzeichnet, dass** der Boden (1) mindestens eine verschließbare Öffnung (8) zur Entlüftung aufweist.
